# EUROPEAN PATENT APPLICATION

(11) **EP 1 429 262 A2**
(43) Date of publication of application: **16.06.2004**
(21) Application number: 03256538.4
(22) Date of filing: 16.10.2003
(51) Int. Cl.: G06F 17/30, G06F 3/12

(54) **Process and apparatus for keeping records**

(30) Priority: 11.12.2002 GB 0228873
(71) Applicant: UNILEVER PLC, London EC4P 4BQ (GB); UNILEVER N.V., 3013 AL Rotterdam (NL)
(72) Inventor: Cooper, James Bernard Unilever R&D Port Sunlight, Wirral Merseyside CH63 3JW (GB)
(74) Representative: Elliott, Peter William

(57) **Abstract**

A computer implemented process for keeping records which comprises: outputting a document in electronic form to a designated printer means, said designated printer means having an associated printer driver; capturing the document as output to the printer means and storing the captured document in a database (for examples as a 'Windows Metafile'; and, printing the document in an indexed form (for example on numbered sheets of paper).

## Description

### Field Of the Invention

The present invention relates to a process and apparatus for keeping electronic and printed records, particularly records of a scientific or other investigative nature, in a manner which assists in determining the veracity of the records.

### Background to the Invention

In certain circumstances it is useful to be able to prove that records are true contemporaneous records and that the probability that the records have been tampered with is low. One such circumstance arises when technical workers are required to demonstrate the date of data and other information contained in notebooks. With a view to the possibility of later patent litigation, it has been custom and practice for technical workers to maintain their records in bound, paper notebooks which have numbered pages and which are kept under secure conditions. It has also been custom and practice for pages to be signed and dated by a witness.

In recent years there has been a marked trend towards electronic record keeping. This has certain advantages over paper in that records can be easily shared by large groups of workers and that relatively large quantities of information can be stored in a small physical space.

Unfortunately, electronic records can be tampered with and in later patent proceedings the possibility of tampering can cast doubt on the veracity of electronic records. Several technologies have been developed to preserve the integrity of electronic data. One such system is disclosed in US 5754933 (Joseph E. Orndorff). In this system data stored in an electronic form is periodically printed out to paper stock which has been modified to indicate tampering. This modification can take several forms, including treating the paper to indicate photocopying by means of a colour change, unique serial numbering and provision of a place for witnessing the final result. The system is well-known and has enjoyed some commercial success.

Other systems have been proposed which do not rely on a printed output but on so-called 'electronic signature'. In these systems, elaborate steps are taken to ensure that an electronic record cannot be modified without leaving a trail of the modification.

Another difficulty with electronic record-keeping is that the quantity of data which is amassed is often very large and produced using a very broad range of computer applications. These applications may include spreadsheets, word-processors, and graphics packages. Worse still, these applications are frequently upgraded or replaced as the state of the art progresses. This presents the designer of an indexing system for an electronic record system with a significant problem, as data must be stored and recovered in diverse formats. This problem is addressed in EP 1235163 and other related patents of the NuGenesis Technologies Corporation. The solution proposed is to use the printer software which most computer packages are equipped with to produce a standardised form of output (such as a so-called 'Windows metafile') that can be recognised by a broad range of printers. This allows most software to present the indexing system with a recognisable 'document' in the same manner that the software would send a document to a printer. Ingeniously, the system described in EP 1235163 installs a 'fake' printer and documents which are sent to this 'printer' are in fact sent into an electronic archive.

The above-mentioned systems have some disadvantages. One the one hand paper record keeping systems are less tamper-sensitive, but are difficult to share with a plurality of users as the data is still kept in physical form. On the other hand, the database systems suffer the disadvantage that electronic records are open to accusations of tampering or falsification and this can make it difficult to prove, for example, that certain facts were known and certain conclusions had been appreciated as of a particular date.

### Description of the Invention

We have determined that benefits of both systems can be attained by ensuring that documents are both printed to a tamper-evident physical form and archived for retrieval electronically.

Accordingly, an improved process for keeping records comprises:
a) outputting a document in electronic form to a designated printer means, said designated printer means having an associated printer driver,
b) capturing the document as output to the printer means and storing the captured document in a database, and,
c) printing the document in an indexed form.

In the present specification a 'document in electronic form' includes a visual representation form such as a Windows™ metafile of the type sent to a printer when the print routine of an application is called.

The electronic form of the document can be that generated by the application, but is preferably that generated by a so-called operating system of which Windows and Linux are examples. The particular advantage of using a standard form common to the operating system is that the record keeping system is capable of working with any application software that operates under that particular operating system.

A 'designated printer means' includes any printer means which can be selected by the user to physically print a document to paper. Preferably the operative layer of the system is not visible to the user. In a typical form, the user sees a conventional printer driver of the type that can be accessed and installed from the operating system, for example from the 'settings' menu of Windows. Sending a document to this printer results in a document being physically printed and captured for storage in the database.

EP 1235163 and other related patents of the NuGenesis Technologies Corporation describe in detail how the capture process can be further modified by the association of documents with 'tags' which aid retrieval of related documents.

A 'document in an indexed form' includes any printed document in a form which includes unique indicia for that document. This includes a document printed on indexed paper stock, such as numbered sheets. The paper stock may have other features, for example some or all of those disclosed in US 5754933 (Joseph E. Orndorff), to assist in the verification of documents printed on the stock.

By means of the present invention the process of providing tamper-evident records is greatly simplified. A technical worker need only send his documents to a specified printer and they are both printed onto tamper evident paper and electronically stored for access both by that technical worker and by others. This requires a single or very few operations on the part of the technical worker and access to the data by others does not compromise the validity of the printed copies as a contemporaneous record.

It is envisaged that the invention can be put into effect using freely available 'broadcast' printer software such as that available from INTELLIscribe™ or H-bar systems. This is used in combination with archiving software available from NuGenesis Technologies Corporation of Westborough MA (US) and paper of the type available as 'Scrip Safe' ™ paper from Invisible Images Inc of Cincinnati Ohio.

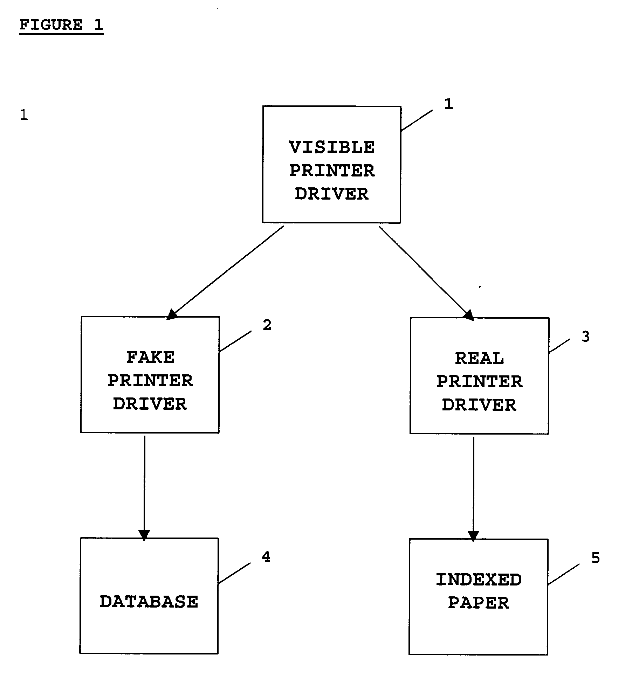

In order that the invention may be further understood it will be further described below with reference to the accompanying figure 1.

### Example

Figure 1 shows in schematic form an embodiment of the present invention.

Boxes (2) and (4) represent the normal set up of an archiving system which uses a 'fake' printer driver (2) to direct files prepared for printing to a database (4) where they are stored in an application independent form, typically as so-called Windows™ metafiles.

Boxes (3) and (5) represent a 'real' printer driver (3) which produces physical output (5) on indexed paper.

In embodiments of the invention the user sees a visible 'printer driver' (1) which appears as a selectable printer in either the Windows settings area or in the printer settings area of an application. Normally this printer driver would be represented by a network printer address of the type '\\patentserver\archive'.

The user selects this printer driver when wishing to both print and archive a document. The printer driver is actually a broadcast printer driver which redirects the file fed to it to the two other printer drivers (2) and (3). Printer driver (3) is the real printer driver associated with an actual printer, which prints to a stock of indexed paper and produces output (5). Printer Driver (2) is the 'fake' printer driver which causes the document to be stored in database (4). Collectively, driver elements (1)-(3) form the printer driver associated with the designated printer means that prints output (5). Thus, while the document is printed in indexed form at (5) for physical record purposes it is also stored in the database (4) in an application independent format.

Database (4) may be accessed by other software (not shown) to allow the contents of the document to be retrieved.

## Claims

1. A computer implemented process for keeping records which comprises:
a) outputting a document in electronic form to a designated printer means, said designated printer means having an associated printer driver (3),
b) capturing the document as output to the printer means and storing the captured document in a database (4), and,
c) printing the document (5) in an indexed form.

2. A process according to claim 1 wherein printing the document in an indexed form comprises the step of printing the document on numbered sheets of paper.

3. A process according to claim 1 wherein the captured document is stored in the database as a so-called 'Windows Metafile'.
